# EUROPEAN PATENT SPECIFICATION

(11) **EP 2 670 236 B1**
(45) Date of publication and mention of the grant of the patent: **13.04.2016**
(21) Application number: 12701365.4
(22) Date of filing: 18.01.2012
(51) Int. Cl.: A01M 1/14, A01M 1/10

(54) **INSECT CATCHING DEVICE**
INSEKTENFANGVORRICHTUNG
DISPOSITIF DE CAPTURE D'INSECTES

(30) Priority: 03.02.2011 GB 201101852; 06.09.2011 GB 201115403
(43) Date of publication of application: 11.12.2013
(73) Proprietor: Killgerm Group Limited, Ossett, West Yorkshire WF5 9NA (GB)
(72) Inventor: GREENING, John Llewellyn, Kinlet Worcestershire DY12 3DW (GB); McGOWAN, Neil, Wakefield Yorkshire WF2 0LB (GB)
(74) Representative: Burton, Nick
(86) International application number: PCT/GB2012/050094
(87) International publication number: WO 2012/104598

(56) References cited:
- EP-A1- 1 212 942
- EP-A1- 2 269 448
- EP-A2- 0 947 134
- WO-A1-98/10643
- US-A- 4 815 231

## Description

This invention relates to an insect catching device. The invention is concerned in particular with a device of the kind which comprises a source of radiation which can emit radiation having a wavelength suitable for attracting insects to the device, and an amount of an adhesive material provided on a catching surface. Insects which are attracted to the device by the radiation may impinge on the adhesive material and be caught by the device.

Insect catching devices which use a radiation source to attract insects are known. The radiation will often have a wavelength in the ultraviolet region: suitable radiation sources such as fluorescent tubes or light emitting diodes will often emit radiation having a blue appearance. Radiation sources emitting radiation with a blue-green appearance are also known to be suitable for certain applications.

Insects attracted to such a device by a radiation source can be retained in the device by means of an adhesive material provided on a catching surface. When an insect catching device is used in certain environments such as a food preparation location, it is important that any insects (such as flies) caught by the device are retained in the device and that minimal or no debris escapes from the device. Insects that are caught by a device may degrade or decompose over time and may produce debris which falls from the catching surface. This debris may collect in the bottom of the device. The debris may also fall out of the device which may contaminate a work area.

Known insect catching devices may have a large depth in a front to rear direction or a large volume to accommodate these various components. When installed at a location, a device with a large depth may cause an increased risk of collision with people or objects. This may lead to a higher chance of injury to people or damage to the device. A large device also leads to increased material costs. A device with a large depth may not be able to be installed in a confined space.

EP 2 269 448 A1 describes an insect trap comprising a body and immobilisation means for immobilising and retaining insects. A cover is releaseably attached to the body. The cover includes windows which align with light tubes of the trap when the cover is in a closed configuration.

The present invention seeks to provide an insect catching device which may be slimmer than known devices (ie the device may have a decreased depth in a front to rear direction).

Aspects of the invention are defined in the accompanying claims.

According to an aspect of the invention there can be provided an insect catching device comprising:
a housing having a front portion and a rear portion which is connected to the front portion;
a radiation source which is mounted inside the housing which can emit radiation having a wavelength suitable for attracting insects; and
an insect catching member located within the housing, the insect catching member having a catching surface on which an amount of an adhesive material is provided;
wherein the front portion of the housing defines an aperture which allows insects to enter the housing and be caught on the adhesive material;
wherein the housing defines a vent located in a bottom side of the housing and separately from the aperture to create an airflow to draw cool air from below the housing into the housing by convection resulting from the heat generated by the radiation source during use of the device;
wherein the housing has a guiding formation which guides the airflow within the housing to flow over the hottest part of the radiation source; and
wherein in use the airflow removes heat from the adhesive material or radiation source to reduce impairment of the adhesive material by heat generated by the radiation source.

An insect catching device according to the present invention may be made slimmer by reducing the maximum depth of the device in the front to rear direction.

In a slimmer device the radiation source may be located closer to the catching surface. Therefore the minimum distance between the radiation source and the adhesive material may be decreased. This may improve the efficiency of the device by providing less of a distance for an attracted insect to travel from the radiation source before it is caught on the adhesive material. However, the closer proximity of the radiation source to the adhesive material may cause the adhesive material to absorb more heat from the radiation source when the device is in use. The increased heat absorbed by the adhesive material may impair the performance and working lifetime of the adhesive material. For example the increased heat may cause the adhesive material to melt and flow off the catching surface.

To reduce the impairment of the adhesive material, a vent is defined in the housing of the insect catching device. The vent is positioned to create an airflow into the housing by convection resulting from the heat generated by the radiation source during use of the device. Some of the heat generated by the radiation source or absorbed by the adhesive material is removed by the airflow. This may reduce the impairment of the adhesive material by preventing it from reaching a temperature high enough for it to melt during use of the device.

The minimum distance between the radiation source and the adhesive material may be less than 50mm. The minimum distance between the radiation source and the adhesive material may be less than 40mm. Preferably the minimum distance between the radiation source and the adhesive material is less than 30mm. The minimum distance between the radiation source and the adhesive material may be less than 25mm. The minimum distance between the radiation source and the adhesive material may be less than 22.5mm. The minimum distance between the radiation source and the adhesive material may be less than 15mm.

The insect catching device may comprise a plurality of radiation sources. The insect catching device may comprise two radiation sources. Preferably the insect catching device comprises three radiation sources. The insect catching device may comprise four radiation sources. The insect catching device may comprise more than four radiation sources.

The radiation source may emit ultraviolet radiation (eg. the radiation source may emit radiation having a wavelength less than 400nm). The radiation source may emit radiation having a peak wavelength in the range from 360nm to 370nm. The majority of the radiation emitted from the radiation source may have a wavelength in the range from 360nm to 370nm.

The radiation source may comprise an incandescent bulb. The radiation source may comprise one or more light emitting diodes (LEDs). Preferably the radiation source comprises a fluorescent tube. Each radiation source may be selected from the group consisting of an incandescent bulb, one or more LEDs or a fluorescent tube.

The fluorescent tube may be a linear fluorescent tube. The fluorescent tube may have a diameter of approximately 16mm (5/8 inch) which is known as a T5 tube. The fluorescent tube may have a diameter of less than 16mm. The fluorescent tube may be powered by a magnetic or an electronic ballast. Preferably the fluorescent tube is powered by an electronic ballast. When powered by an electronic ballast, a 14 watt T5 tube may have a surface temperature of about 60 to 65°C during use. The present invention may reduce the effect of this high temperature being close to the adhesive material in use through the action of the airflow removing heat from the radiation source or the adhesive material.

The fluorescent tube may operate at high frequency with an electronic ballast. The fluorescent tube may be a high efficiency fluorescent tube. The electronic ballast may be connected to a suitable power supply via a power supply socket.

The reduced diameter of a T5 lamp (16mm) when compared to a T8 lamp with a diameter of approximately 25mm (1 inch) may allow the housing of the insect catching device to be made slimmer in the front to rear direction. The slimmer T5 lamp may be mounted in the device closer to the insect catching member. This may improve the catch rate of the trap. For example, an insect may be more likely to contact the adhesive material on the insect catching member if the radiation source is closer to the insect catching member.

A T5 lamp may operate at a higher temperature than an equivalent T8 lamp. This higher operating temperature may impair the performance of an adhesive material if appropriate measures such as the definition of the vent in the housing are not taken to keep the adhesive material below its melting temperature.

The insect catching device may further comprise a shield located between the radiation source and the adhesive material for reducing exposure of the adhesive material to direct radiation from the radiation source.

Direct radiation from the radiation source may impair the adhesive material. For example, exposure of the adhesive material to direct ultraviolet radiation may cure the adhesive material and impair its performance.

The shield may also reflect heat generated by the radiation source away from the adhesive material. In this way the shield may reduce impairment of the adhesive material by heat generated by the radiation source.

The shield may be attached to the radiation source. The shield may be mounted separately from the radiation source. Where the radiation source is a fluorescent tube, the shield may be coated on the surface of the tube.

The shield may extend along substantially the whole length of the radiation source. The shield may be shaped to direct ultraviolet radiation from the radiation source out of the aperture. The shield may be shaped to direct heat radiation from the radiation source out of the aperture. The shield may be shaped to reduce the exposure of the adhesive material to ultraviolet radiation from the radiation source. The shield may be shaped to reduce the exposure of the adhesive material to heat radiation from the radiation source.

The shield may be metallic. Preferably the shield comprises aluminium.

The shield may be curved. Preferably the shield is concave.

The radiation source may be coated with a plastic coating. The plastic coating may be a shatterproof coating. The shatterproof coating may prevent parts of the radiation source from exiting the housing in the event that the radiation source breaks.

The plastic coating may be located over the shield. This may insulate a user who touches the radiation source from any voltage induced in the shield due to operation of the radiation source.

The insect catching device may be a flying insect catching device. The adhesive material may be suitable for catching flying insects.

Reducing the exposure of the adhesive material to ultraviolet radiation and heat may prolong the working lifetime of the adhesive material or reduce impairment of the adhesive material. This may maintain the efficiency of the insect catching device over time.

The adhesive material may comprise a hot melt adhesive. A hot melt adhesive may be applied to the catching surface in a liquid form at an elevated temperature. The hot melt adhesive may then cool and solidify on the catching surface.

The adhesive material may comprise a wet type adhesive. A wet type adhesive may be applied to the catching surface at a lower temperature than a hot melt adhesive.

Preferably the adhesive material comprises a hot melt adhesive. This is because a hot melt adhesive may have a higher melting temperature than a wet type adhesive. The hot melt adhesive may have a melting point above 45°C. The hot melt adhesive may have a melting point in the range from 50°C to 60°C. Suitable hot melt adhesives are widely available.

The viscosity of the adhesive material may decrease with temperature. If the adhesive material reaches a certain temperature and viscosity during use, the adhesive may begin to melt and run off the catching surface of the insect catching member. This may impair the performance of the adhesive material and the insect catching member. The adhesive material may have a melting point in the range from 50°C to 60°C.

To reduce impairment of the adhesive material, the insect catching member may be adapted to lose heat quickly.

The insect catching member may be adapted to radiate heat efficiently. The insect catching member has a catching surface on which an amount of the adhesive material is provided. The catching surface may be substantially dark coloured for improved radiative heat emittance. A dark coloured catching surface will lose heat by radiative heat emittance faster than a lighter colour. The catching surface may be coloured to take advantage of this effect. For example, the catching surface may be coloured dark brown, dark grey or black. Preferably the catching surface is coloured black.

The insect catching member may have a high surface area and a low volume. A high surface area may allow the insect catching member to dissipate heat quickly. The insect catching member may be a sheet. A sheet has a high surface area to volume ratio.

The insect catching member may comprise a first portion and a second portion. The catching surface may be located on the first portion.

The first portion may be mounted substantially vertically in the housing. Insects caught on the first portion of the insect catching member may decompose over time. Decomposed insect debris not retained by the adhesive material may fall from the first portion of the insect catching member.

In use, the second portion of the insect catching member may extend in a generally perpendicular direction from the first portion. By extending in a generally perpendicular direction from the first portion the second portion may retain debris which falls from insects caught on the first portion when the insect catching device is in use. The included angle between the first portion and the second portion may be less than 135°. The included angle between the first portion and the second portion may be less than 120°.

A further amount of the adhesive material may be provided on the second portion of the insect catching member. The further amount of the adhesive material may help prevent debris from exiting the housing by retaining on the second portion debris which falls from the first portion.

The insect catching member may be supplied separately from the housing. The insect catching member may be replaceable. In use, the insect catching member may be replaced at regular intervals once it has caught a certain quantity of insects.

The first portion and the second portion of the insect catching member may form a unitary body. The unitary body may be manipulable to make the first portion extend generally perpendicularly from the second portion. The unitary body may be a sheet. The sheet may comprise a fold line which defines the first portion and second portion. The sheet may be foldable along the fold line to make the second portion extend generally perpendicularly from the first portion.

The insect catching member may be composed of cardboard or plastic.

The housing has a front portion and a rear portion which is connected to the front portion. The front portion of the housing defines an aperture which allows insects to enter the housing and be caught on the adhesive material. The front portion may have a front face. The rear portion may have a rear face.

The insect catching device may be wall mountable. The housing may comprise a wall mounting point. The wall mounting point may allow the rear face of the housing to be mounted on a wall. The insect catching device may be free standing. The insect catching device may be supportable by a stand.

The housing may also have a top section and a bottom section. When the housing is in position for use, the top section of the housing may be located above the bottom section. The top section may extend above a midpoint of the housing. The bottom section may extend below the mid point of the housing.

The housing may also have a first side and a second side. The first side may have a first side face and the second side may have a second side face. The first side face and the second side face may be located between the front face and the rear face of the housing. The first side may extend from the midpoint of the housing towards the first side face. The second side may extend from the midpoint of the housing towards the second side face.

The housing may define a plurality of apertures. An aperture may be defined in front of every radiation source. Preferably the housing defines three apertures.

The vent defined in the housing is positioned to created an airflow into the housing by convection resulting from the heat generated by the radiation source during use of the device. In use the airflow will remove heat from the adhesive material or radiation source to reduce impairment of the adhesive material by heat generated by the radiation source. In use, the airflow may directly contact the insect catching member to remove heat from the insect catching member.

The vent is positioned to create an airflow into the housing by convection. The vent may be more effective if it is located closer to the bottom of the housing. The vent may be located in the bottom section of the housing. The vent may be located in the bottom third of the housing. The bottom third of the housing is the part of the housing which extends from the bottom of the housing and defines a third of the volume of the housing. The position of the vent may allow for cool air to be drawn into the housing from the bottom of the insect catching device to cool the radiation source and cool the adhesive material.

The housing may define a plurality of vents. Preferably the housing defines two vents. The housing may define a first vent located in the first side of the housing. The housing may define a second vent located in the second side of the housing.

Heat removed from the radiation source or adhesive material will make air in the airflow warmer. The warmer air will then exit the housing. The warmer air may exit the housing through the aperture. The warmer air may exit the housing through an exhaust. The exhaust may be located in the top section of the housing.

The housing may have a guiding formation which guides the airflow within the housing. The guiding formation may be in the form of a baffle. The baffle may define an opening which guides the airflow in a desired direction. The guiding formation may comprise a first baffle and a second baffle.

The guiding formation may guide the airflow over the radiation source. In use, the airflow may be guided by the guiding formation to flow over the hottest part of the radiation source. The hottest part of a fluorescent tube may be the filament present at the end of the fluorescent tube. When the radiation source is a fluorescent tube, the guiding formation may guide the airflow over the part of the tube which contains the filament. When the guiding formation is in the form of a baffle, the opening in the baffle may be aligned with the filament to guide the airflow over the filament.

During replacement of the insect catching member, the old insect catching member may be removed and the new insect catching member may be inserted into the insect catching device through the bottom section of the housing.

The housing may define one or more guide channels. The (or each) guide channel may guide the insect catching member into position in the housing during replacement of the insect catching member by a user. A first guide channel may be located adjacent the first side of the housing and a second guide channel may be located adjacent the second side of the housing. The first portion of the insect catching member may be inserted into the first guide channel and the second guide channel.

The first portion of the insect catching member may be retained in position in the housing by a first retaining formation. The first retaining formation may be located in the top section of the housing. The first retaining formation may comprise a spring clip. The first retaining formation may comprise a first spring clip and a second spring clip.

The second portion of the insect catching member may be retained in position in the housing by a second retaining formation. The second retaining formation may be located in the bottom section of the housing.

The second retaining formation may be rotatable from a first position in which it retains the insect catching member to a second position in which the insect catching member is removeable from the housing. The second retaining formation may comprise a rotatable tab mounted on the bottom section of the housing. The rotatable tab may be rotatable from a first (closed) position to a second (open) position. In the open position, the insect catching member is removeable from the housing. In the closed position, the rotatable tab may retain the insect catching member by supporting the second portion of the insect catching member in a position generally perpendicular to the first portion. This allows the second portion to catch any debris falling from insects caught on the first portion. The second retaining formation may comprise a first rotatable tab and a second rotatable tab.

The second retaining formation may be attached to the guiding formation. Where the second retaining formation comprises a first rotatable tab and a second rotatable tab and the guiding formation comprises a first baffle and a second baffle, the first rotatable tab may be rotatably attached to the first baffle and the second rotatable tab may be rotatably attached to the second baffle.

The housing may comprise a front cover and a housing body. The front portion of the housing may comprise the front cover. The rear portion of the housing may comprise the housing body. The front cover may be pivotally attached to the housing body. The front cover may be moveable from a first position adjacent to the housing body to a second position which allows access to the interior of the housing. The first position may be a closed position and the second position may be an open position.

The front cover may be latchable in the second position. A latch mechanism may be provided between the front cover and the housing body. The latch mechanism may comprise a resilient protrusion and a receiving portion. The resilient protrusion may be received in the receiving portion when the front cover is in the closed position. When the front cover is in the open position, the resilient protrusion may abut against another part of the housing. This may latch the front cover in the open position. This may allow a user to remove and replace the insect catching member without using a hand to hold open the front cover.

To move the front cover to the closed position, the resilience of the resilient protrusion is overcome by force and the resilient protrusion can then be moved towards the receiving portion as the front cover is moved towards the closed position. The resilient protrusion may be a dimple in the front cover. The receiving portion may be a dimple receiving portion in the housing body.

The vent defined in the housing may be defined in the front cover. The front cover may define two vents. The vents may be located in a bottom surface of the front cover.

The guiding formation may be defined in the housing body.

The housing may comprise at least 50% by weight metallic components. The metallic components may be suitable for conducting heat generated by the radiation source away from the interior of the housing, This may reduce impairment of the adhesive material.

The housing may comprise at least 60% by weight metallic components. Preferably the housing comprises at least 70% by weight metallic components. The housing may comprise at least 80% by weight metallic components. The housing may comprise at least 90% by weight metallic components.

The metallic components of the housing may comprise stainless steel.

The maximum depth of the device in the front to rear direction may be less than 80mm. The maximum depth of the device in the front to rear direction may be less than 70mm. Preferably the maximum depth of the device in the front to rear direction is less than 60mm. The maximum depth of the device in the front to rear direction may be less than 50mm. The maximum depth of the device in the front to rear direction may be less than 45mm.

The maximum depth of the device in the front to rear direction may be about 40mm.

The maximum depth of the device in the front to rear direction may be greater than 20mm. The maximum depth of the device in the front to rear direction may be greater than 30mm.

An insect catching member for use in an insect catching device as hereinbefore defined can comprise:
a first portion and a second portion wherein the first portion and second portion form a unitary body which is manipulable to make the second portion extend generally perpendicularly from the first portion;
a catching surface located on the first portion; and
an amount of an adhesive material which is provided on the catching surface.

The insect catching member comprises a first portion and a second portion which form a unitary body. The unitary body is manipulable to make the first portion extend generally perpendicularly from the second portion. The unitary body may be a sheet. The sheet may comprise a fold line which defines the first portion and second portion. The sheet may be foldable along the fold line to make the second portion extend generally perpendicularly from the first portion.

By extending generally perpendicularly from the first portion, the second portion may retain debris which falls from the first portion when the insect catching member is in use in an insect catching device as described hereinbefore.

A catching surface as described hereinbefore is located on the first portion. The catching surface may be substantially dark coloured for improved radiative heat emittance as described hereinbefore.

An amount of adhesive material as describe hereinbefore is provided on the catching surface.

A further amount of the adhesive material may be provided on the second portion. The further amount of adhesive material may assist in retention of insect debris when the insect catching member is in use.

The unitary body may be composed of cardboard or similar material. The unitary body may be coloured black.

The present invention will now be described by way of example only with reference to the accompanying drawings in which:
Figure 1 is an isometric view of an insect catching device according to the present invention;
Figure 2 is a section elevation through the device of the invention shown in Figure 1;
Figure 3 is a view of the device shown in Figure 1 with the front cover open and showing the insect catching member in position for use;
Figure 4 is a section elevation through the device as shown in Figure 3;
Figure 5 is an isometric view of the front cover;
Figure 6 is an isometric view of the device including the catching surface with the front cover open showing the insect catching member being removed for inspection or replacement; and
Figure 7 is a view of an insect catching member for use in the insect catching device shown in Figure 1

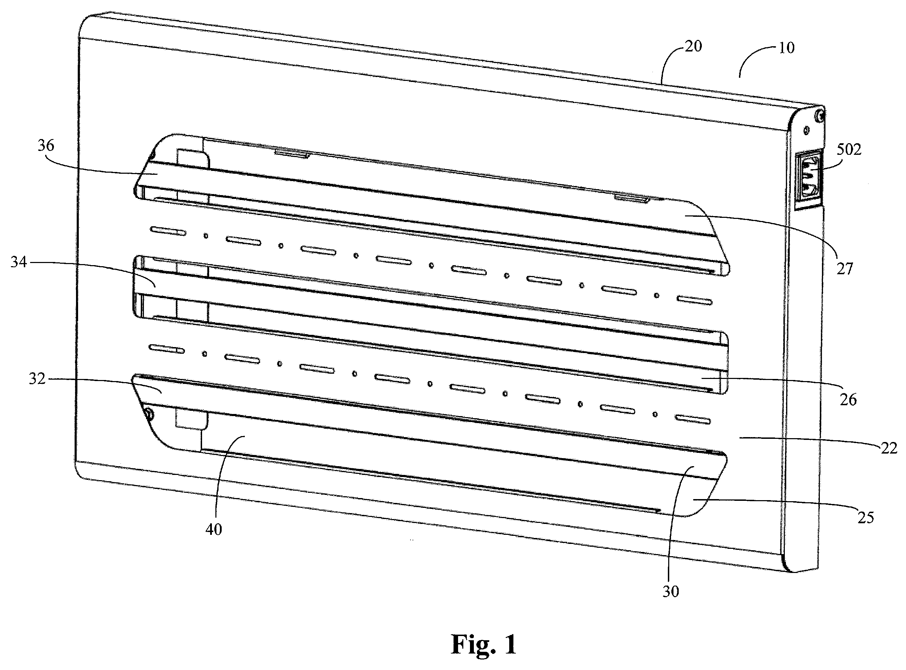

As shown in Figure 1 the insect catching device 10 comprises a housing 20 with a radiation source 30 mounted inside the housing 20 and a insect catching member 40 located within the housing 20.

The radiation source 30 comprises three fluorescent tubes 32, 34, 36 which are size T5 (approximately 16mm diameter). The fluorescent tubes 32, 34, 36 emit ultraviolet radiation having a wavelength which attracts flying insects.

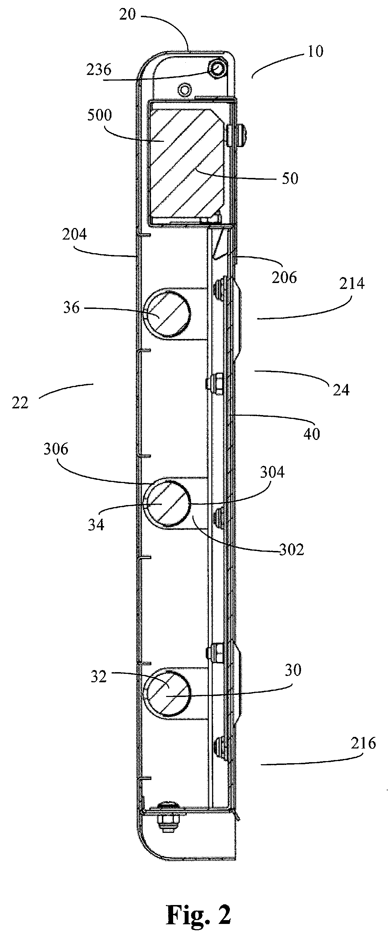

As shown in Figure 2, the housing 20 comprises a front portion 22 with a front face 204 and a rear portion 24 with a rear face 206. Three apertures 25, 26, 27 are defined in the front portion 22 as shown in Figure 1. The three apertures 25, 26, 27 allow flying insects attracted by the fluorescent tubes 32, 34, 36 to enter the housing and be caught by the insect catching member 40. The housing 20 further comprises a top section 214 and a bottom section 216. The top section 214 extends above a midpoint of the housing 20 and the bottom section 216 extends below the midpoint of the housing.

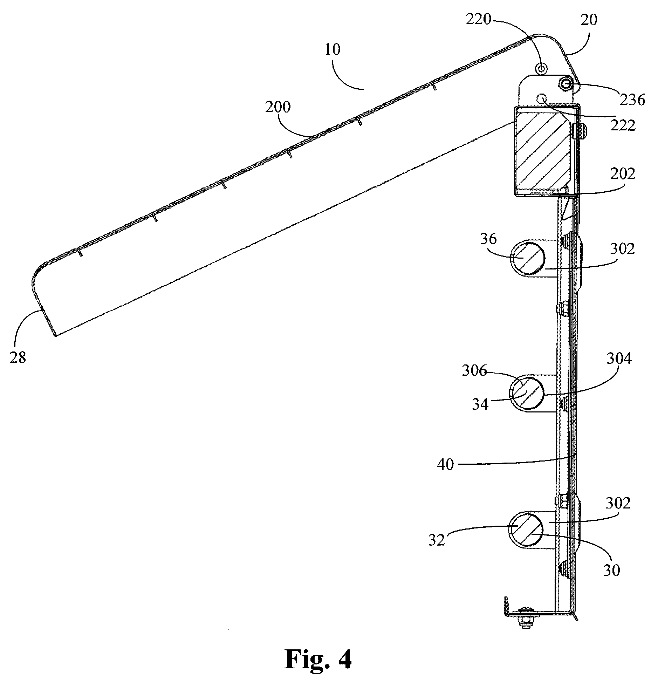

As shown in Figures 2 and 4, each fluorescent tube 32, 34, 36 is coated with a metallic reflective coating 304 on its rear surface. A shatterproof coating 306 is located over the entirety of each fluorescent tube 32, 34, 36 which insulates a user from the metallic reflective coating 304. Each fluorescent tube 32, 34, 36 is mounted to the housing 20 at both ends by a fluorescent tube mount 302. The fluorescent tubes 32, 34, 36 are placed in the housing 20 as far as possible from the insect catching member 40 to reduce the amount of heat which is generated by each fluorescent tube 32, 34 36 in use being transferred to the adhesive material 404 provided on the insect catching member 40. The depth of the housing 20 in the front to rear direction is 40mm. Since a T5 fluorescent tube 32, 34, 36 has a diameter of approximately 16mm, the minimum distance from a fluorescent tube 32, 34, 36 to the adhesive material 404 is less than 25mm.

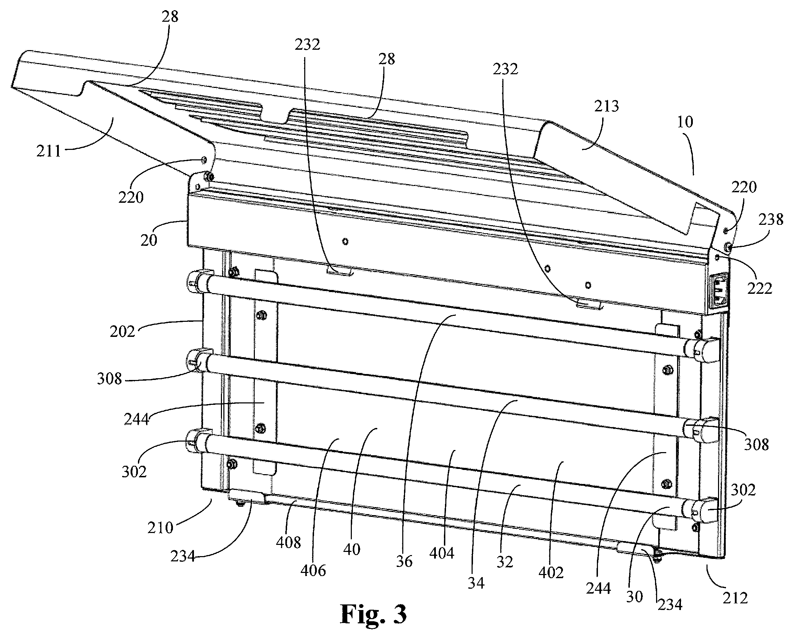

Figure 3 shows the housing 20 comprises a front cover 200 and a housing body 202. The housing also comprises a first side 210 and a second side 212. The front cover 200 provides a first side face 211 and a second side face 213. The first side face 211 and second side face 213 are located between the front face 204 and the rear face 206 of the housing 20. The first side 210 extends from the midpoint of the housing 20 towards the first side face 211 and the second side 212 extends from the midpoint of the housing towards the second side face 213.

The insect catching member 40 comprises a first portion 406 and a second portion 408. An amount of an adhesive material 404 is provided on a catching surface 402 on the first portion 406 of the insect catching member 40. The adhesive material 404 is a hot melt type adhesive. The catching surface 402 is coloured black for improved radiative heat emittance.

The first portion 406 of the insect catching member 40 is retained in position on the housing body 202 by guide channels 244 and a first retaining formation in the form of two spring clips 232. The second portion 408 is retained generally perpendicular to the first portion 406 by a second retaining formation in the form of two rotatable tabs 234. The second portion 408 is supported by the rotatable tabs 234 so that it extends in a generally perpendicular direction to the first portion 406. This allows a further amount of adhesive material 404 provided on the second portion 408 to catch any debris falling from insects caught on the first portion 406 when the insect catching device 10 is in use.

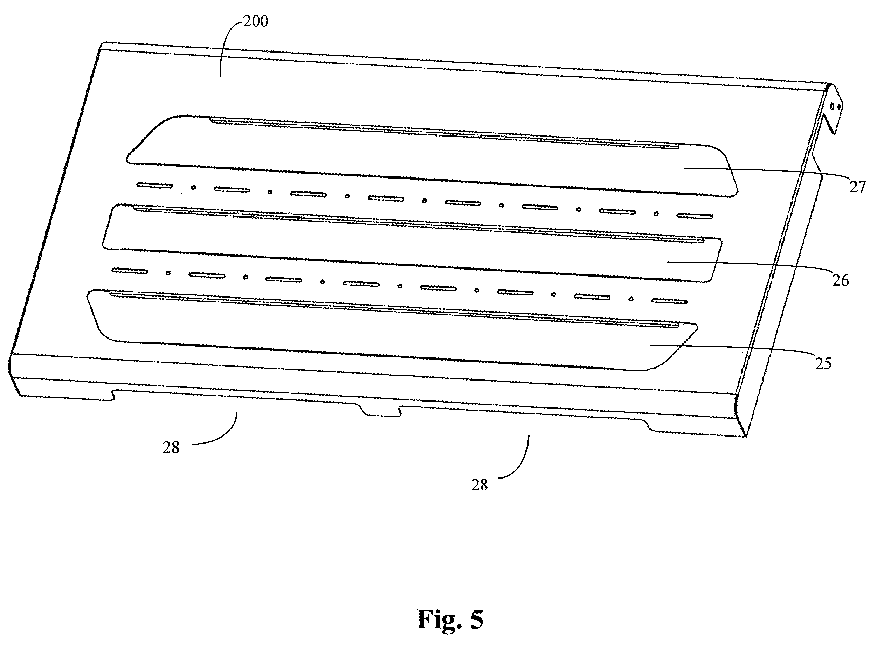

Figures 3 and 5 show that the front cover 200 defines a vent 28. Other embodiments may have two vents 28.

These vents 28 are located separately from the apertures 25, 26, 27 and are positioned to create an airflow into the housing 20 by convection resulting from the heat generated by the fluorescent tubes 32, 34, 36 during use of the insect catching device 10. The vents 28 are located on the bottom of the front cover 200 to draw cool air in from below the housing 20 when the insect catching device 10 is in use. This cool air is then warmed in the housing by the heat generated by the fluorescent tubes 32, 34, 36 to create the airflow by convection. The airflow removes heat from the adhesive material 404 and the fluorescent tubes 32, 34, 36 and this warms the air in the airflow. The warm air then exits the housing through the apertures 25, 26, 27.

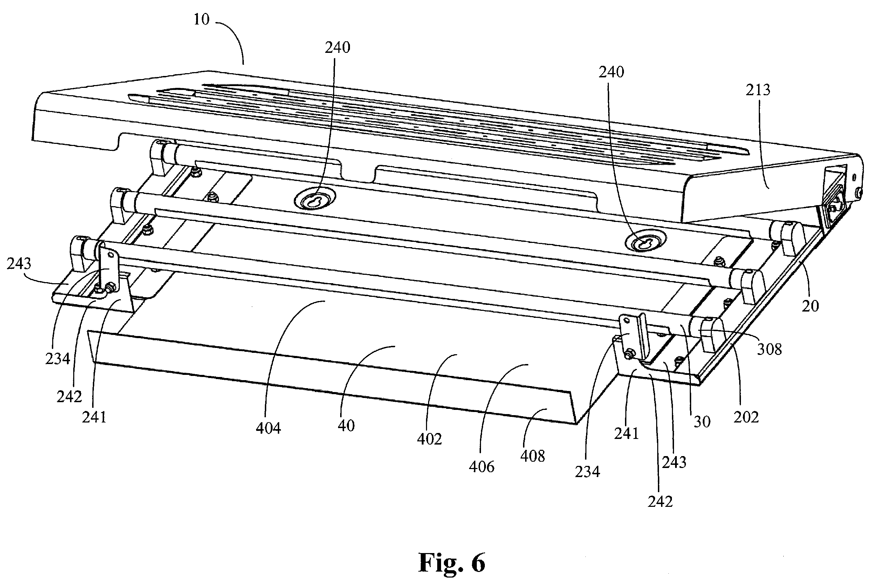

In use the surface temperature of the fluorescent tubes 32, 34, 36 is about 60 to 65°C. The melting point of the adhesive material is in the range from 50°C to 60°C. In use, the airflow removes heat from the adhesive material 404 by directly contacting the insect catching member 40. As can be seen in Figure 6, the airflow entering the vents 28 will directly contact the second portion 408 of the insect catching member 40.

After contacting the insect catching member 40, the airflow is guided within the housing 20 by a guiding formation 242. Figure 6 shows the guiding formation 242 is in the form of two baffles 241 mounted on the housing body 202. The rotatable tabs 234 are rotatably attached to the baffles 241. The baffles 241 each define an opening 243 which guides air over the filament 308 located at the end of each fluorescent tube 32, 34, 36. The filament 308 is the hottest part of each fluorescent tube 32, 34, 36 and so guiding the airflow over the filaments 308 will allow the airflow to remove more heat from the housing 20 and therefore prevent it from reaching the adhesive material 404.

By the action of the airflow firstly directly contacting the insect catching member 40, then being guided by the baffles 241 over the filaments 308 of the fluorescent tubes 32, 34, 36, and finally exiting the housing through the apertures 25, 26, 27, the airflow reduces impairment of the adhesive material 404 by preventing it from reaching its melting point.

As can be seen in Figures 2, 3 and 4 the front cover 200 is pivotally mounted to the housing body 202 by a cover attachment point 236 which includes a screw 238. The front cover 200 can pivot with respect to the housing via the cover attachment point 236 and move from a first (closed) position as shown in Figure 2 to a second (open) position as shown in Figures 3 and 4. The front cover 200 is latchable in the second position. The latching mechanism is in the form of a resilient protrusion provided by a dimple 220 in the front cover 200. When the front cover 200 is in the closed position, the dimple 220 is received in a dimple receiving portion 222. When the front cover 200 is in the open position, the dimple 220 abuts against the housing body 202 as shown in Figure 4. This latches the front cover 200 in the open position. With the front cover 200 latched in the open position, a user who is servicing the insect catching device 10 can remove and replace the insect catching member 40 as shown in Figure 6 without using a hand to hold open the front cover 200. This is advantageous when the insect catching device 10 is mounted in a location which requires a ladder for access. To close the front cover 200, force is used to overcome the resilience of the dimple 220. As the front cover 200 is closed, the dimple 220 is moved back to engage with the dimple receiving portion 222.

As shown in Figure 6 the rotatable tabs 234 are rotatable from a closed position (shown in Figure 3) to an open position (shown in Figure 6) to remove the insect catching member 40 from the insect catching device 10. In the open position, the rotatable tabs 234 allow the insect catching member 40 to be removed or inserted into the housing 20 via the guide channel 244. In the closed position the rotatable tabs 234 retain the insect catching member 40 in the insect catching device 10 by supporting the second portion 408 of the insect catching member 40 in a position generally perpendicular to the first portion 406.

Once the rotatable tabs 234 are in the open position, the insect catching member 40 can be removed through the bottom section 216 of the housing 20. This allows the insect catching member 40 to be replaced once it has reached the end of its working lifetime.

The insect catching device 10 is mountable on a wall via wall mounting points 240 which are located on the rear portion 24 of the housing 20.

The insect catching device 10 comprises electronics 50 which control and provide power to the fluorescent tubes 32, 34, 36. An electronic ballast 500 is located at the top of the housing body 202 which provides the necessary voltage to the fluorescent tubes 32, 34, 36. A power supply socket 502 allows the electronic ballast to be connected to a suitable power supply (not shown).

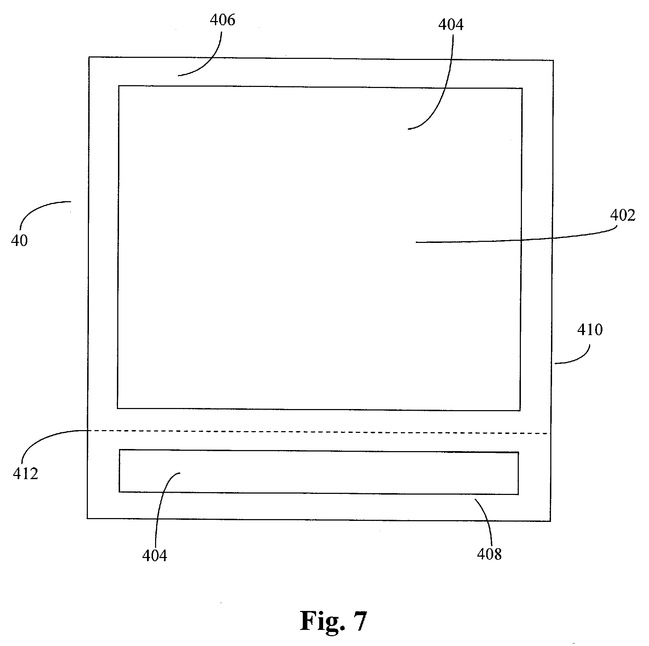

Figure 7 shows an insect catching member 40 for use in an insect catching device 10 as shown in Figures 1 to 6. The insect catching member 40 comprises a first portion 406 and a second portion 408 which form a unitary body 410. The unitary body 410 can be manipulated to make the second portion 408 extend generally perpendicularly from the first portion 406.

A catching surface 402 is located on the first portion 406 and an amount of an adhesive material 404 is provided on the catching surface 402. The adhesive material 404 is a hot melt adhesive with a melting point in the range from 50°C to 60°C.

The unitary body 410 is in the form of a sheet of cardboard which comprises a fold line 412 which defines the first portion 406 and second portion 408. The sheet is foldable along the fold line 412 to make the second portion 408 extend generally perpendicularly from the first portion 406.

By extending generally perpendicularly from the first portion 406, the second portion 408 may retain debris which falls from the first portion 406 when the insect catching member 40 is in use in an insect catching device 10 as shown in Figures 1 to 6.

The catching surface 402 is coloured black for improved radiative heat emittance.

A further amount of the adhesive material 404 is provided on the second portion. The further amount of adhesive material may assist in retention of insect debris when the insect catching member 40 is in use.

## Claims

1. An insect catching device (10) comprising:
a housing (20) having a front portion (22) and a rear portion which is connected to the front portion;
a radiation source (30) which is mounted inside the housing which can emit radiation having a wavelength suitable for attracting insects; and
an insect catching member (40) located within the housing, the insect catching member having a catching surface (402) on which an amount of an adhesive material (404) is provided;
wherein the front portion of the housing defines an aperture (25, 26, 27) which allows insects to enter the housing and be caught on the adhesive material;
wherein the housing defines a vent (28) located in a bottom side of the housing and separately from the aperture to create an airflow to draw cool air from below the housing into the housing by convection resulting from the heat generated by the radiation source during use of the device;
wherein the housing has a guiding formation (242) which guides the airflow within the housing to flow over the hottest part (308) of the radiation source (32, 34, 36); and
wherein in use the airflow removes heat from the adhesive material or radiation source to reduce impairment of the adhesive material by heat generated by the radiation source.

2. An insect catching device as claimed in claim 1 wherein in use the airflow directly contacts the insect catching member.

3. An insect catching device as claimed in claim 1 or claim 2 wherein the insect catching member comprises a first portion (406) and a second portion (408) wherein in use the second portion extends in a generally perpendicular direction to the first portion for retaining debris which falls from insects caught on the first portion.

4. An insect catching device as claimed in claim 3 wherein the first portion of the insect catching member is retained in position in the housing by a first retaining formation (232) and the second portion of the insect catching member is retained in position in the housing by a second retaining formation (234).

5. An insect catching device as claimed in claim 4 wherein the second retaining formation is rotatable from a first position in which it retains the insect catching member to a second position in which the insect catching member is removeable from the housing.

6. An insect catching device as claimed in any preceding claim wherein the front portion of the housing comprises a front cover (200) and the rear portion of the housing comprises a housing body (202).

7. An insect catching device as claimed in claim 6 wherein the front cover is pivotally attached to the housing body and the front cover is moveable from a first position adjacent to the housing body to a second position which allows access to the interior of the housing wherein the front cover is latchable in the second position.

8. An insect catching device as claimed in claim 6 or 7 wherein the vent defined in the housing is defined in the front cover.

9. An insect catching device as claimed in claim 6, 7 or 8 wherein the guiding formation is defined in the housing body.

10. An insect catching device as claimed in any preceding claim wherein the minimum distance between the adhesive material and the radiation source is less than 30mm.

11. An insect catching device as claimed in any preceding claim wherein the minimum distance between the adhesive material and the radiation source is less than 15mm.

12. An insect catching device as claimed in any preceding claim wherein the maximum depth of the device in the front to rear direction is less than 60mm.

13. An insect catching device as claimed in any preceding claim wherein the maximum depth of the device in the front to rear direction is less than 45mm.

14. An insect catching device as claimed in any preceding claim wherein the guiding formation comprises a baffle, wherein the baffle defines an opening which guides the airflow in a desired direction.

15. An insect catching device as claimed in claim 14, wherein the opening in the baffle is aligned with a filament of the radiation source to guide the airflow over the filament.

## Patentansprüche

1. Insektenfangvorrichtung (10), umfassend:
ein Gehäuse (20), welches einen vorderen Abschnitt (22) und einen hinteren Abschnitt, welcher mit dem vorderen Abschnitt verbunden ist, aufweist;
eine Strahlungsquelle (30), welche innerhalb des Gehäuses montiert ist und welche eine Strahlung emittiert, die eine Wellenlänge aufweist, welche zum Anlocken von Insekten geeignet ist; und
ein Insektenfangteil (40), welches innerhalb des Gehäuses angeordnet ist, wobei das Insektenfangteil eine Fangfläche (402) aufweist, auf welcher eine Menge eines klebenden Materials (404) vorhanden ist;
wobei der vordere Abschnitt des Gehäuses eine Öffnung (25, 26, 27) definiert, welche ermöglicht, dass Insekten in das Gehäuse eindringen und auf dem klebenden Material gefangen werden;
wobei das Gehäuse ein Luftloch (28) definiert, welches in einer Bodenseite des Gehäuses und getrennt von der Öffnung angeordnet ist, um einen Luftstrom zu erzeugen, um kühle Luft von unterhalb des Gehäuses durch Konvektion, welche sich aus der Wärme ergibt, die durch die Strahlungsquelle während des Betriebs der Vorrichtung erzeugt wird, in das Gehäuse zu ziehen;
wobei das Gehäuse eine Führungsanordnung (242) aufweist, welche den Luftstrom in das Gehäuse führt, um über den heißesten Teil (308) der Strahlungsquelle (32, 34, 36) zu strömen; und
wobei im Betrieb der Luftstrom Wärme von dem klebenden Material oder von der Strahlungsquelle entfernt, um eine Beeinträchtigung des klebenden Materials durch Wärme, welche durch die Strahlungsquelle erzeugt wird, zu verringern.

2. Insektenfangvorrichtung nach Anspruch 1, wobei im Betrieb der Luftstrom direkt das Insektenfangteil kontaktiert.

3. Insektenfangvorrichtung nach Anspruch 1 oder Anspruch 2, wobei das Insektenfangteil einen ersten Abschnitt (406) und einen zweiten Abschnitt (408) umfasst, wobei sich im Betrieb der zweite Abschnitt in im Allgemeinen senkrechter Richtung zu dem ersten Abschnitt erstreckt, um Abfall zurückzuhalten, welcher von den Insekten fällt, welche auf dem ersten Abschnitt gefangen sind.

4. Insektenfangvorrichtung nach Anspruch 3, wobei der erste Abschnitt des Insektenfangteils durch eine erste Halteanordnung (232) in einer Position in dem Gehäuse gehalten wird und wobei der zweite Abschnitt des Insektenfangteils durch eine zweite Halteanordnung (234) in einer Position in dem Gehäuse gehalten wird.

5. Insektenfangvorrichtung nach Anspruch 4, wobei die zweite Halteanordnung von einer ersten Position, in welcher sie das Insektenfangteil hält, in eine zweite Position drehbar ist, in welcher das Insektenfangteil von dem Gehäuse entfernbar ist.

6. Insektenfangvorrichtung nach einem der vorhergehenden Ansprüche, wobei der vordere Abschnitt des Gehäuses eine vordere Abdeckung (200) und der hintere Abschnitt des Gehäuses einen Gehäusekörper (202) umfasst.

7. Insektenfangvorrichtung nach Anspruch 6, wobei die vordere Abdeckung schwenkend an dem Gehäusekörper angebracht ist und wobei die vordere Abdeckung von einer ersten Position benachbart zu dem Gehäusekörper in eine zweite Position bewegbar ist, welche einen Zugang zu dem Inneren des Gehäuses ermöglicht, wobei die vordere Abdeckung in der zweiten Position verriegelbar ist.

8. Insektenfangvorrichtung nach Anspruch 6 oder 7, wobei das Luftloch, welches in dem Gehäuse definiert ist, in der vorderen Abdeckung definiert ist.

9. Insektenfangvorrichtung nach Anspruch 6, 7 oder 8, wobei die Führungsanordnung in dem Gehäusekörper definiert ist.

10. Insektenfangvorrichtung nach einem der vorhergehenden Ansprüche, wobei der minimale Abstand zwischen dem klebenden Material und der Strahlungsquelle kleiner als 30 mm ist.

11. Insektenfangvorrichtung nach einem der vorhergehenden Ansprüche, wobei der minimale Abstand zwischen dem klebenden Material und der Strahlungsquelle kleiner als 15 mm ist.

12. Insektenfangvorrichtung nach einem der vorhergehenden Ansprüche, wobei die maximale Tiefe der Vorrichtung in der Richtung von vorn nach hinten kleiner als 60 mm ist.

13. Insektenfangvorrichtung nach einem der vorhergehenden Ansprüche, wobei die maximale Tiefe der Vorrichtung in der Richtung von vorn nach hinten kleiner als 45 mm ist.

14. Insektenfangvorrichtung nach einem der vorhergehenden Ansprüche, wobei die Führungsanordnung eine Umlenkung umfasst, wobei die Umlenkung eine Öffnung definiert, welche den Luftstrom in eine gewünschte Richtung führt.

15. Insektenfangvorrichtung nach Anspruch 14, wobei die Öffnung in der Umlenkung mit einem Filament der Strahlungsquelle ausgerichtet ist, um den Luftstrom über das Filament zu führen.

## Revendications

1. Dispositif de capture d'insectes (10), comprenant :
un boîtier (20) ayant une partie avant (22) et une partie arrière qui est reliée à la partie avant ;
une source de rayonnement (30) qui est montée à l'intérieur du boîtier qui peut émettre un rayonnement ayant une longueur d'onde appropriée pour attirer des insectes ; et
un élément de capture d'insectes (40) situé dans le boîtier, l'élément de capture d'insectes ayant une surface de capture (402) sur laquelle est prévue une quantité d'un matériau adhésif (404) ;
dans lequel la partie avant du boîtier définit une ouverture (25, 26, 27) qui permet aux insectes d'entrer dans le boîtier et d'être capturés sur le matériau adhésif ;
dans lequel le boîtier définit un évent (28) situé dans un côté inférieur du boîtier et séparément de l'ouverture pour créer un écoulement d'air pour aspirer l'air froid depuis le dessous du boîtier dans le boîtier par convection résultant de la chaleur générée par la source de rayonnement pendant l'utilisation du dispositif ;
dans lequel où le boîtier a une formation de guidage (242) qui guide l'écoulement d'air dans le boîtier pour s'écouler sur la partie la plus chaude (308) de la source de rayonnement (32, 34, 36) ; et
dans lequel, lors de l'utilisation, l'écoulement d'air élimine la chaleur du matériau adhésif ou de la source de rayonnement pour réduire l'altération du matériau adhésif par la chaleur générée par la source de rayonnement.

2. Dispositif de capture d'insectes tel que revendiqué dans la revendication 1, dans lequel, lors de l'utilisation, l'écoulement d'air entre directement en contact avec l'élément de capture d'insectes.

3. Dispositif de capture d'insectes tel que revendiqué dans la revendication 1 ou 2, dans lequel l'élément de capture d'insectes comprend une première partie (406) et une deuxième partie (408), dans lequel, lors de l'utilisation, la deuxième partie s'étend dans une direction globalement perpendiculaire à la première partie pour retenir des débris qui tombent des insectes capturés sur la première partie.

4. Dispositif de capture d'insectes tel que revendiqué dans la revendication 3, dans lequel la première partie de l'élément de capture d'insectes est retenue en position dans le boîtier par une première formation de retenue (232) et la deuxième partie de l'élément de capture d'insectes est retenue en position dans le boîtier par une deuxième formation de retenue (234).

5. Dispositif de capture d'insectes tel que revendiqué dans la revendication 4, dans lequel la deuxième formation de retenue peut tourner d'une première position dans laquelle elle retient l'élément de capture d'insectes à une deuxième position dans laquelle l'élément de capture d'insectes peut être retiré du boîtier.

6. Dispositif de capture d'insectes tel que revendiqué dans l'une des revendications précédentes, dans lequel la partie avant du boîtier comprend un couvercle avant (200) et la partie arrière du boîtier comprend un corps de boîtier (202).

7. Dispositif de capture d'insectes tel que revendiqué dans la revendication 6, dans lequel le couvercle avant est fixé en pivotement au corps du boîtier et le couvercle avant peut être déplacé d'une première position adjacente au corps du boîtier à une deuxième position qui permet d'accéder à l'intérieur du boîtier où le couvercle avant peut être verrouillé dans la deuxième position.

8. Dispositif de capture d'insectes tel que revendiqué dans la revendication 6 ou 7, dans lequel l'évent défini dans le boîtier est défini dans le couvercle avant.

9. Dispositif de capture d'insectes tel que revendiqué dans la revendication 6, 7 ou 8, dans lequel la formation de guidage est définie dans le corps du boîtier.

10. Dispositif de capture d'insectes tel que revendiqué dans l'une des revendications précédentes, dans lequel la distance minimale entre le matériau adhésif et la source de rayonnement est inférieure à 30 mm.

11. Dispositif de capture d'insectes tel que revendiqué dans l'une des revendications précédentes, dans lequel la distance minimale entre le matériau adhésif et la source de rayonnement est inférieure à 15 mm.

12. Dispositif de capture d'insectes tel que revendiqué dans l'une des revendications précédentes, dans lequel la profondeur maximale du dispositif dans la direction avant-arrière est inférieure à 60 mm.

13. Dispositif de capture d'insectes tel que revendiqué dans l'une des revendications précédentes, dans lequel la profondeur maximale du dispositif dans la direction avant-arrière est inférieure à 45 mm.

14. Dispositif de capture d'insectes tel que revendiqué dans l'une des revendications précédentes, dans lequel la formation de guidage comprend un déflecteur, dans lequel le déflecteur définit un orifice qui guide l'écoulement d'air dans une direction souhaitée.

15. Dispositif de capture d'insectes tel que revendiqué dans la revendication 14, dans lequel l'orifice dans le déflecteur est aligné avec un filament de la source de rayonnement pour guider l'écoulement d'air sur le filament.
